# EUROPÄISCHE PATENTSCHRIFT

(11) **EP 1 166 927 B1**
(45) Veröffentlichungstag und Bekanntmachung des Hinweises auf die Patenterteilung: **31.08.2005**
(21) Anmeldenummer: 01113726.2
(22) Anmeldetag: 05.06.2001
(51) Int. Cl.: B23B 5/16

(54) **Schälgerät**
Peeling apparatus
Appareil de décroutage

(30) Priorität: 05.06.2000 DE 10027315; 05.06.2000 DE 10027316; 05.06.2000 DE 20009868 U
(43) Veröffentlichungstag der Anmeldung: 02.01.2002
(73) Patentinhaber: PF Schweisstechnologie GmbH, 36304 Alsfeld (DE)
(72) Erfinder: Merle, Bernd, 36304 Alsfeld (DE); Spychalski-Merle, Achim, 36304 Alsfeld (DE)
(74) Vertreter: Fritsche, Rainer

(56) Entgegenhaltungen:
- DE-A- 3 529 527

## Beschreibung

Die Erfindung betrifft ein Schälgerät für zylinderförmige Gegenstände, insbesondere für Kunststoffrohre, mit mehreren zu einer Laufschale zusammengefügten Rollen, einem wenigstens ein Schälmesser und wenigstens eine Führungsrolle aufweisenden Schälerkopf und einem die Laufschale und den Schälerkopf verbindenden Spindeltrieb, der eine mit einer schlitzförmigen Öffnung versehene Spindelführung und eine darin drehbare Spindel mit einem Betätigungsgriff umfasst, wobei der Schälerkopf und die Laufschale, zwischen denen der zylinderförmige Gegenstand einspannbar ist, über die Spindel relativ zueinander bewegbar sind.

Die Oberflächen von Rohren, Kabeln oder zylindrischen Stangen müssen vor einer Weiterverarbeitung häufig bearbeitet werden. So ist es beispielsweise bei Kabeln notwendig, eine Isolationsschicht zu entfernen, während bei der Verschweißung von Kunststoffrohren vor dem Verschweißen die Oberfläche der Rohre abgeschabt werden muss. Hierbei wird eine Schicht in der Größenordnung von 0,05 mm bis 0,3 mm in den miteinander zu verschweißenden Bereichen entfernt. Auf diese Weise werden Schmutzeinschlüsse aus dem Herstellungsprozess sowie alterungsbedingte Materialveränderungen, die beispielsweise durch UV-Schädigung oder Witterung an der Oberfläche auftreten können, entfernt, die sonst zu unzureichenden Schweißergebnissen führen würden.

Um eine möglichst dünne Oberflächenschicht von dem zu bearbeitenden Gegenstand exakt entfernen zu können, muss die Schnitttiefe des Messers genau einjustiert werden. Dieses Einjustieren des Messers, das bei einer Veränderung der Schnitttiefe sowie bei einem Messerwechsel notwendig ist, erfordert Geschicklichkeit und große Erfahrung des Bedieners. Wird das Messer falsch ausgerichtet, so wird häufig eine nur unzureichende Bearbeitungsqualität erzielt. Von den zu bearbeitenden Gegenständen wird dann entweder zuviel Material abgenommen, wodurch bei Rohren ggf. der Restquerschnitt in unzulässiger Weise verringert wird, oder es werden die durch Schmutzeinschlüsse oder Alterung geschädigten Oberflächenschichten nicht vollständig entfernt. Wird das Messer schräg ausgerichtet, so ist es möglich, dass an dem zu schälenden Gegenstand unerwünschte Riefen oder Rillen zurückbleiben, die das Schweißen beeinträchtigen können.

Rollbundware weist herstellungsbedingt eine gewisse Ovalität auf, die auch bei Rohren mit großem Durchmesser durch längere Lagerungszeiten auftritt. Diese Ovalität von Rohren ist beim Schälen unerwünscht, da bei einem fest eingestellten Abstand zwischen den Laufrollen und dem Schälerkopf mit dem darauf angeordneten Messer der Spanabhub unregelmäßig und unsauber wird, so dass keine zufriedenstellenden Bearbeitungsergebnisse erzielt werden können. In Extremfällen können Bereiche des Rohres unbearbeitet bleiben, während andere Bereiche des Rohres unzulässig tief abgeschält werden.

Zum Entfernen einer Oberflächenschicht von Rohren oder ähnlichem ist beispielsweise aus der DE 93 05 220 U ein Schälgerät der eingangs genannten Art bekannt, dessen Schälmesser fest mit dem Schälerkopf verbunden ist. Bei diesem Schälgerät muss die Schnitttiefe des Schälmessers genau einjustiert werden, um eine möglichst dünne Oberflächenschicht von dem zu bearbeitenden Gegenstand exakt abschaben zu können. Dieses Einjustieren wird bei jeder Veränderung der Schnitttiefe sowie bei einem Messerwechsel notwendig, um zu vermeiden, dass durch eine falsche Ausrichtung des Schälmessers eine nur unzureichende Bearbeitungsqualität erzielt wird.

Weiter ist es für Schälgeräte bekannt, die Führungsrolle schräg zu der Laufrichtung der Laufrollen der Laufschale auszurichten, um das Schälgerät in axialer Richtung auf dem zu schälenden Gegenstand, wie einem Rohr oder ähnlichem, zu bewegen. Auf diese Weise kann das Schälgerät in einer Schraubenbewegung um den zu schälenden Gegenstand geführt werden, wobei die Steigung durch die Schrägstellung der Führungsrolle an den Durchmesser des zu bearbeitenden Gegenstandes sowie die Breite des Schälmessers angepasst werden muss.

Für spezielle Anwendungen, wie beispielsweise das Anbringen von Anbohrschellen oder Rohrabgängen an Kunststoffrohren, ist es notwendig, nur den halben Umfang des Rohres abzuschälen. Mit dem oben beschriebenen herkömmlichen Schälgerät ist es jedoch nur möglich, den gesamten Umfang des zu bearbeitenden Gegenstandes kontinuierlich abzuschaben, ohne bei der Bearbeitung abzusetzen und das Schälgerät axial auf den zu schälenden Gegenstand zu verschieben. Das Abschälen nur des halben Umfangs des Rohres, also eines Sattelbereiches auf dem Rohr, ist mit einem bekannten Schälgerät umständlich. Zudem sind die Platzverhältnisse auf Baustellen und insbesondere in Baugruben bei einem nachträglichen Anbringen von Anbohrschellen oder Rohrabgängen so eng, dass ein herkömmlicher Rotationsschaber meist nicht einsetzbar ist.

Aufgabe der Erfindung ist es daher, ein Schälgerät der eingangs genannten Art bereitzustellen, das sich neben der Bearbeitung des gesamten Umfangs des zu schälenden Gegenstandes auch für die Bearbeitung von Sattelbereichen auf einem zylinderförmigen Gegenstand eignet, ohne dass dabei die Handhabbarkeit oder die Bearbeitungsqualität verschlechtert wird.

Diese Aufgabe wird erfindungsgemäß dadurch gelöst, dass die wenigstens eine Führungsrolle in einem Lagerblock frei drehbar gelagert ist, der an dem Schälerkopf um eine zu der Achse der Führungsrolle senkrechte und exzentrisch angeordnete Achse frei schwenkbar befestigt ist. Durch die Bewegung des Schälgerätes um den zu schälenden zylinderförmigen Gegenstand herum kann die Achse der Führungsrolle relativ zu der Achse des zu schälenden Gegenstandes verschwenkt werden, so dass das Schälgerät in einer schraubenförmigen Bewegung um den zylinderförmigen Gegenstand bewegt wird. Bei einer Richtungsumkehr der Bewegungsrichtung des Schälgerätes schwenkt auch der frei drehbar gelagerte Lagerblock, so dass bei einer abwechselnden Bewegung des Schälgerätes um den halben Umfang des zylinderförmigen Gegenstandes das Schälgerät immer in die gleiche axiale Richtung weiter bewegt wird. Mit dem erfindungsgemäßen Schälgerät ist es somit möglich, auch den für Anbohrschellen oder Rohrabgänge erforderlichen Bereich eines zylinderförmigen Gegenstandes zu schälen, ohne den kompletten Umfang des Gegenstandes bearbeiten zu müssen. Bei gleichbleibender Bearbeitungsqualität kann somit die Zeit zur Bearbeitung eines zylinderförmigen Gegenstandes deutlich reduziert werden, wenn nur die geforderten Bereiche abgeschabt werden. Da der Drehpunkt des Lagerblocks außerhalb seiner Mitte liegt, schwenkt der gesamte Lagerblock bei einer Bewegung des Schälgerätes automatisch in eine Position, die einen axialen Vorschub des Schälgerätes auf den zu schälenden Gegenstand bewirkt.

Vorzugsweise sind in dem Lagerblock zwei koaxiale Führungsrollen gelagert. Die Führung des Schälgerätes auf dem zu schälenden, zylinderförmigen Gegenstand wird auf diese Weise verbessert. Ungenauigkeiten bei der Bearbeitung, wie etwa mehrmaliges Abschälen der gleichen Stelle oder Rillenbildungen, werden so vermieden.

Weiterhin ist vorgesehen, dass der Lagerblock federnd an dem Schälerkopf befestigt ist. Dadurch kann ein konstanter Anpressdruck der Führungsrollen an dem zu schälenden Gegenstand erzielt werden.

Alternativ hierzu ist es möglich, die Führungsrollen selbst federnd in dem Lagerblock zu lagern. Auf diese Weise kann ebenfalls ein konstanter Anpressdruck der Führungsrollen an dem zu schälenden Gegenstand erreicht werden, so dass durch die hohe Führungsgenauigkeit eine gute Bearbeitungsqualität erzielt wird.

Nach einer bevorzugten Ausführungsform der Erfindung ist vorgesehen, dass die Achsen der Führungsrollen in wenigstens einer Winkelposition zu der Achse des zu schälenden, zylinderförmigen Gegenstands ausrichtbar und fixierbar sind. Die Steigung der Schraubenbewegung, mit der das Schälgerät um den zu bearbeitenden Gegenstand bewegt wird, kann somit fest eingestellt werden. Ein Bearbeiter kann dadurch sicherstellen, dass die Schnittbreite des Schälmessers durch die Steigung nicht überschritten wird, so dass eine hohe Bearbeitungsqualität erzielbar ist. Für unterschiedlich große Durchmesser der zu bearbeitenden Gegenstände ist die Steigung über die Schrägstellung der Achsen der Führungsrollen so einstellbar, dass eine optimale Schnittbreite erzielt werden kann.

In Weiterbildung der Erfindung wird bevorzugt, dass an dem Lagerblock eine Feststellschraube zur Fixierung des Lagerblocks relativ zu dem Schälerkopf vorgesehen ist. Durch eine Feststellschraube kann der Lagerblock schnell und effektiv relativ zu dem Schälerkopf ausgerichtet fixiert werden. Auch eine Änderung der Ausrichtung des Lagerblocks zu dem Schälerkopf kann zügig erfolgen, beispielsweise wenn ein Gegenstand mit einem anderen Durchmesser bearbeitet werden soll, oder wenn die Messerbreite variiert wird.

Erfindungsgemäß ist es vorgesehen, dass an dem Schälerkopf zwei Vorsprünge ausgebildet sind, zwischen denen der Lagerblock schwenkbar ist. So lässt sich vermeiden, dass der Lagerblock unzulässig weit verschwenkt wird und eine exakte Führung des Schälgerätes an dem zu bearbeitenden Gegenstand dadurch unmöglich wird. Vorzugsweise ist der Bereich, in dem der Lagerblock schwenkbar ist, einstellbar, so dass das Schälgerät an unterschiedliche Steigungen angepasst werden kann.

Nach einer weiteren Ausführungsform weist das Schälmesser eine in einem Gleitschuh aufgenommene, mit diesem einstückig ausgebildete Klinge auf, wobei der Gleitschuh an dem Schälerkopf lösbar befestigt ist. Der Gleitschuh liegt damit an dem zu schälenden Gegenstand an und ermöglicht somit eine gute Führung der Klinge des Schälmessers an dem zu schälenden Gegenstand. Auf diese Weise kann eine besonders gleichmäßige Schnitttiefe und damit eine konstante Bearbeitungsqualität erzielt werden. Zudem bringt die einstückige Ausgestaltung des Gleitschuhs mit der Klinge den Vorteil mit sich, dass das umständliche Einjustieren des Messers entfällt. Die Klinge wird schon bei der Fertigung im richtigen Winkel zu dem Gleitschuh ausgerichtet und mit diesem verbunden, so dass der die Klinge tragende Gleitschuh nur noch an dem Schälerkopf befestigt werden muss.

Vorzugsweise weist der Gleitschuh zwei durch eine Ausnehmung voneinander beabstandete Gleitflächen auf. Diese Gleitflächen liegen an dem zu bearbeitenden Gegenstand an und führen die Klinge des Schälermessers. Ein Verkanten der Klinge des Schälermessers kann dadurch vermieden werden, dass an dem Gleitschuh nicht nur eine, sondern zwei Gleitflächen vorgesehen sind, die voneinander beabstandet sind. Liegen diese beiden Gleitflächen gleichzeitig an dem zu bearbeitenden Gegenstand an, so wird durch das erfindungsgemäße Schälgerät eine hohe Bearbeitungsgenauigkeit erreicht.

In Weiterbildung der Erfindung ist vorgesehen, die Klinge des Schälmessers in der Ausnehmung des Gleitschuhs anzuordnen, wobei die Klinge bereichsweise über die Gleitfläche des Gleitschuhs hinausragt. Die Klinge des Schälmessers wird somit zwischen den beiden Gleitflächen des Gleitschuhs geführt. Ein Verkanten der Klinge auf dem zu schälenden Gegenstand kann auf diese Weise vermieden werden.

Nach einer bevorzugten Ausführungsform der Erfindung ist die Klinge mit dem Gleitschuh über eine Schraubverbindung an dem Schälerkopf befestigt. Das Auswechseln der Klinge mit dem Gleitschuh ist dadurch mit einfachen Mitteln schnell durchführbar. Zur Befestigung der Klinge mit dem Gleitschuh an dem Schälerkopf ist vorzugsweise nur eine einzige Schraube notwendig.

Alternativ hierzu ist vorgesehen, dass die Klinge mit dem Gleitschuh über eine Rastverbindung an dem Schälerkopf befestigt ist. Dadurch kann die Montage oder Demontage der Klinge mit dem Gleitschuh an dem Schälerkopf nochmals erleichtert werden, da die Klinge über die Rastverbindung ohne Zuhilfenahme von Werkzeugen an dem Schälerkopf befestigbar und lösbar ist. Die Bedienung des erfindungsgemäßen Schälgeräts wird auf diese Weise deutlich erleichtert.

Vorzugsweise ist die Klinge eine an zwei Seiten angeschliffene Wendeklinge. Das Schälmesser des erfindungsgemäßen Schälgerätes stellt somit gleichzeitig eine Ersatzklinge bereit. Die Anzahl der vorzuhaltenen Ersatzteile für das Schälgerät kann auf diese Weise gesenkt werden. Die Herstell- und Betriebskosten des Schälgeräts bleiben somit niedrig. Mit der Wendeklinge kann auch erreicht werden, dass mit einer einzigen Klinge zwei unterschiedliche Schnitttiefen erzielbar sind, wenn die beiden angeschliffenen Seiten der Wendeklinge unterschiedlich weit über die Gleitflächen des Gleitschuhs hinausragen.

Nach einer weiteren Ausführungsform der Erfindung ist der Gleitschuh in einem Messerhalter federnd und/oder kippbar an dem Schälerkopf befestigt. Rundheitsabweichungen, wie Ovalitäten oder ähnliches, des zu bearbeitenden Gegenstandes können somit ebenso wie Ungenauigkeiten in axialer Richtung durch das erfindungsgemäße Schälgerät ausgeglichen werden, ohne dass der Abstand zwischen der Laufschale und dem Schälmesser während der Bearbeitung nachjustiert werden muss. Es kann so die Handhabung des Schälgeräts vereinfacht und gleichzeitig das Bearbeitungsergebnis deutlich gesteigert werden. Durch die Vorspannung des Messers wird zudem ein gleichmäßiger Anpressdruck erzielt, der eine konstante Bearbeitungsqualität auch bei längerem Betrieb des Schälgerätes sicherstellen kann. Die Kippbarkeit des Gleitschuhs verhindert ebenfalls eine Verkantung oder Schrägstellung der Klinge, so dass Riefen und ähnliches vermieden werden.

Erfindungsgemäß ist es vorgesehen, dass der Messerhalter um einen Bolzen schwenkbar und durch wenigstens zwei Federn beaufschlagt in dem Schälerkopf gelagert ist. Die Konstruktion des Gleitschuhs mit der Klinge kann auf diese Weise einfach gehalten werden, da die federnde Lagerung des Gleitschuhs in dem Schälerkopf untergebracht ist, in dem ausreichend Bauraum hierfür zur Verfügung steht. Auch ein Auswechseln des Gleitschuhs kann auf diese Weise vereinfacht werden, da nicht die gesamte federnde Lagerung mit ausgewechselt werden muss, sondern nur die Befestigung des Gleitschuhs an dem federnd gelagerten Messerhalter gelöst werden muss. Die Handhabung des erfindungsgemäßen Schälgeräts wird auf diese Weise deutlich erleichtert.

Nach einer weiteren Ausführungsform der Erfindung ist vorgesehen, dass der Schälerkopf und/oder die Laufschale einen Gewindeabschnitt aufweisen, über den sie durch einen Schnappverschluss mit der Spindel in lösbaren Eingriff bringbar sind. Dies ermöglicht es, zur Grobverstellung des Abstands zwischen der Laufschale und den Schälerkopf den Gewindeabschnitt von der Spindel zu lösen und diesen Abstand ohne Betätigung der Spindel an den Durchmesser des zu bearbeitenden Gegenstandes anzupassen. Die Feinjustierung des Abstands zwischen der Laufschale und dem Schälerkopf kann dann durch Betätigung der Spindel erfolgen, wenn der Gewindeabschnitt des Schälerkopfes oder der Laufschale in die Spindel eingreift.

Weiterhin ist erfindungsgemäß vorgesehen, dass in dem Spindeltrieb an wenigstens einem Ende zwischen der Spindel und der Spindelführung ein elastisches Element angeordnet ist. Die Spindel wird dadurch unter einer Vorspannung in der Spindelführung gehalten. Diese Vorspannung wird von der Spindel über den Gewindeabschnitt auf den Schälerkopf bzw. die Laufschale übertragen. Rundheitsabweichungen, wie Ovalitäten oder ähnliches, des zu bearbeitenden Gegenstandes können so durch das Schälgerät ausgeglichen werden, ohne dass der Abstand zwischen der Laufschale und dem Schälerkopf während der Bearbeitung nachjustiert werden muss. Die Handhabung des Schälgerätes wird dadurch vereinfacht und gleichzeitig kann das Bearbeitungsergebnis deutlich verbessert werden.

In Weiterbildung der Erfindung wird vorgeschlagen, dass an dem dem Betätigungsgriff abgewandten Ende der Spindel ein mit dieser verbundenes und wenigstens bereichsweise in die Spindelführung hinein bewegbaren Indikatorelement vorgesehen ist. Wird die Spindel beim Einspannen eines zu bearbeitenden Gegenstandes zwischen der Laufschale und dem Schälerkopf gegen die Kraft des oder der elastischen Elemente in der Spindelführung verschoben, so wird auch das mit der Spindel verbundene Indikatorelement bewegt, welches im unbelasteten Zustand der Spindel aus der Spindelführung hinausragt. Die Federkonstante der elastischen Axiallagerung der Spindel kann dabei so gewählt werden, dass sich bei einer definierten Vorspannkraft der Spindel das Indikatorelement an einer bestimmten Position befindet, also beispielsweise bündig mit der Spindelführung abschließt. Über die Position des Indikatorelements kann so die Vorspannkraft der Spindel abgelesen werden. Ein Benutzer kann mit Hilfe des Indikatorelements leicht eine optimale Vorspannung der Spindel einstellen, um somit eine gute Bearbeitungsqualität zu erzielen.

Im Folgenden wird die Erfindung anhand von Ausführungsbeispielen näher erläutert, die in der Zeichnung dargestellt sind.

Es zeigen:
- Fig. 1: eine schematische Seitenansicht eines erfindungsgemäßen Schälgerätes,
- Fig. 2: eine schematische Draufsicht auf den Lagerblock des Schälgerätes gemäß Fig. 1 in einer ersten Bewegungsrichtung,
- Fig. 3: eine Fig. 2 entsprechende Draufsicht auf den Lagerblock in einer zweiten Bewegungsrichtung,
- Fig. 4: eine vergrößerte Schnittansicht eines erfindungsgemäßen Schälmessers zur Verwendung in einem Schälgerät gemäß Fig. 1,
- Fig. 5: eine Draufsicht auf das Schälmesser nach Fig. 4,
- Fig. 6: eine vergrößerte Schnittansicht eines Schälmessers nach einer weiteren Ausführungsform der Erfindung,
- Fig. 7: eine Draufsicht auf das Schälmesser nach Fig. 6,
- Fig. 8: eine vergrößerte schematische Darstellung des Messerhalters mit Schälmesser und
- Fig. 9: eine vergrößerte, teilweise aufgebrochene Darstellung des Bereichs IX in Fig. 1.

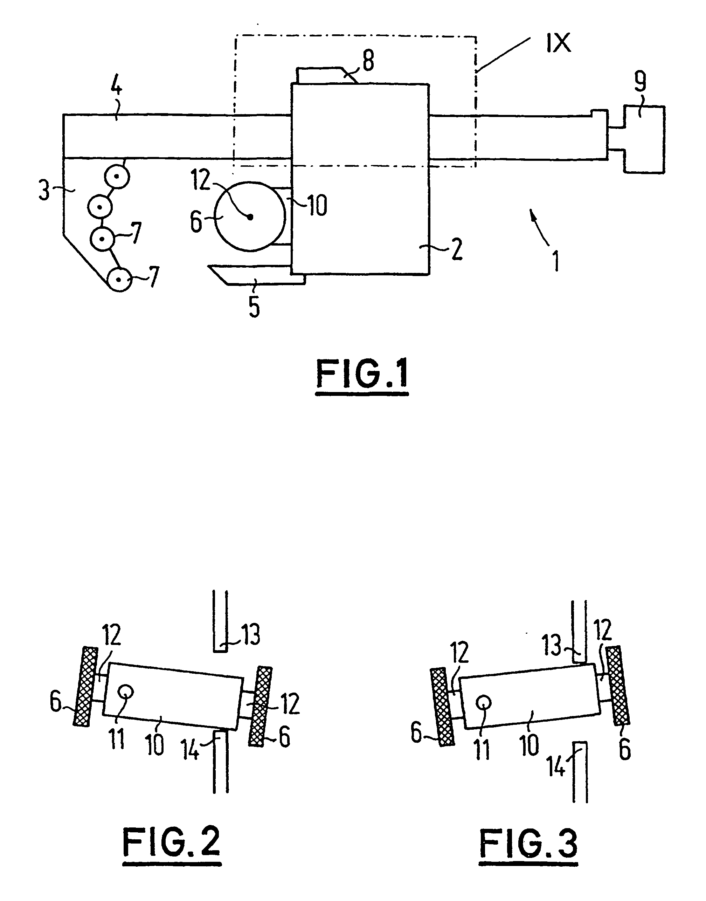

Das in Fig. 1 gezeigte Schälgerät 1 weist einen Schälerkopf 2 und eine Laufschale 3 auf. Die Laufschale 3 ist fest mit einem Spindeltrieb 4 verbunden, über den der Schälerkopf 2 relativ zu der Laufschale 3 bewegbar ist.

An dem Schälerkopf 2 sind ein Schälmesser 5 sowie Führungsrollen 6 vorgesehen. Das Schälmesser 5 und die Führungsrollen 6 liegen dabei der Laufschale 3 gegenüber, so dass ein runder Gegenstand zwischen der Laufschale 3 und den Führungsrollen 6 des Schälerkopfes 2 eingespannt werden kann, während das Schälmesser 5 an dem Gegenstand anliegt. Die Laufschale 3 ist dabei aus mehreren Rollen 7 gebildet, die frei drehbar in der Laufschale 3 gelagert sind. Die Rollen 7 sind so positioniert, dass ein an den Rollen 7 anliegender runder Gegenstand in Abhängigkeit seines Durchmessers mit wenigstens zwei Rollen 7 in Kontakt ist.

Weiterhin ist an dem Schälerkopf 2 ein Schnappverschluss 8 vorgesehen, über den der Schälerkopf 2 unabhängig von dem Spindeltrieb 4 relativ zu der Laufschale 3 verschiebbar ist. In einem ersten Zustand des Schälerkopfes 2 ist dieser mit dem Spindeltrieb 4 in Eingriff und kann über einen Betätigungsgriff 9 an dem der Laufschale 3 gegenüberliegenden Ende des Spindeltriebes 4 bewegt werden. In einem zweiten Zustand des Schälerkopfes 2 kann dieser über den Schnappverschluss 8 mit dem Spindeltrieb 4 außer Eingriff gebracht werden und so frei auf dem Spindeltrieb 4 relativ zu der Laufschale 3 verschoben werden.

In den vergrößerten Darstellungen der Fig. 2 und 3 ist gezeigt, dass die Führungsrollen 6 in einem gemeinsamen Lagerblock 10 gelagert sind. Der Lagerblock 10 ist über eine Lagerung 11 an dem Schälerkopf 2 schwenkbar befestigt, die zu der Grundfläche des Lagerblocks 10 exzentrisch angeordnet ist. Die beiden Führungsrollen 6 sind über Drehachsen 12 koaxial miteinander und frei drehbar in dem Lagerblock 10 gelagert. Von dem Schälerkopf 2 stehen zwei Vorsprünge 13 und 14 hervor, zwischen denen der Lagerblock 10 um seine Lagerung 11 verschwenkbar ist.

Wird das Schälgerät 1 betätigt, liegen die Führungsrollen 6 an einem zu bearbeitenden Gegenstand an und werden um den Umfang des zu schälenden Gegenstands bewegt. In Abhängigkeit von der Bewegungsrichtung des Schälgerätes 1 wird der Lagerblock 10 in die in den Fig. 2 und 3 gezeigten Positionen verschwenkt. Fig. 2 stellt dabei die Position des Lagerblocks 10 dar, wenn der Schälerkopf in der Figur nach unten bewegt wird. Entsprechend stellt Fig. 3 die Position des Lagerblocks 10 dar, wenn der Schälerkopf 2 in der Figur nach oben bewegt wird.

Durch die exzentrische Lagerung 11 des Lagerblocks 10 wird dieser aufgrund der Drehbewegung um den zu bearbeitenden Gegenstand so weit verschwenkt, bis dieser an den Vorsprung 13 bzw. 14 an dem Schälerkopf 2 anstößt. Auf diese Weise werden die Achsen 12 der Führungsrollen 6 schräg zu dem zu schälenden Gegenstand ausgerichtet, so dass das Schälgerät 1 in einer Schraubenbewegung um den zu schälenden Gegenstand bewegt wird.

Für den Fall, dass nicht der gesamte Umfang eines zu bearbeitenden Gegenstandes geschält werden soll, sondern nur ein Ausschnitt davon, kann dies durch einen Wechsel der Bewegungsrichtung des Schälgerätes um den zu bearbeitenden Gegenstand realisiert werden. Durch den Wechsel der Bewegungsrichtung wird auch der Lagerblock 10 mit den Führungsrollen 6 zwischen den in den Fig. 2 und 3 gezeigten Positionen verschwenkt, so dass trotz Änderung der Umfangsbewegung des Schälgerätes 1 eine Axialbewegung des Schälgerätes 1 (nach rechts in den Fig. 2 und 3) realisiert werden kann.

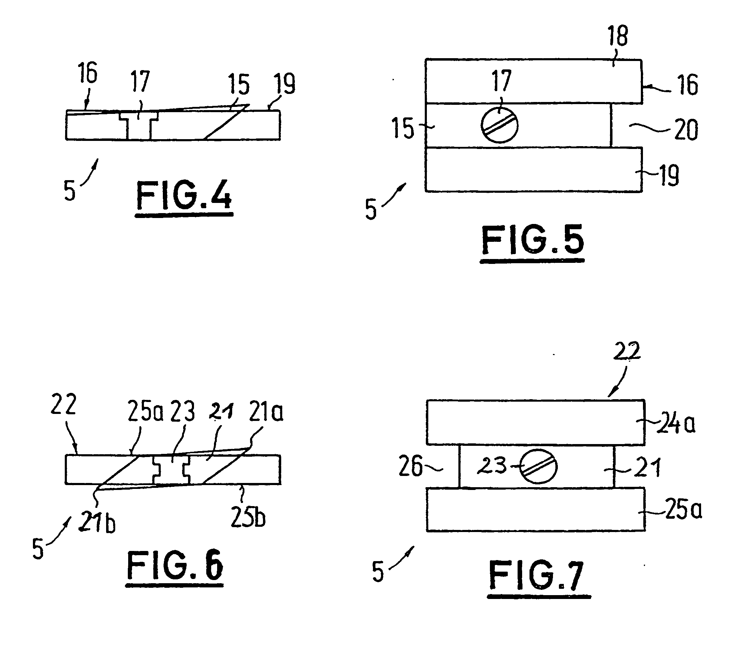

In den Fig. 4 und 5 ist eine erste Ausführungsform eines erfindungsgemäßen Schälmessers 5 dargestellt, das einen mit einer Klinge 15 einstückigen Gleitschuh 16 umfasst. Die Klinge 15 mit dem Gleitschuh 16 ist über eine Schraubverbindung 17 an dem Schälerkopf 2 befestigbar.

Der Gleitschuh 16 weist zwei zueinander parallele und voneinander beabstandete Gleitflächen 18 und 19 auf. Zwischen den Gleitflächen 18 und 19 ist eine Ausnehmung 20 ausgebildet, in der die Klinge 15 positioniert ist.

Wie aus der Darstellung von Fig. 4 ersichtlich, ragt die Spitze der Klinge 15 über die Gleitflächen 18 und 19 des Gleitschuhs 16 hinaus. Die Höhe, die die Klinge 15 über den Gleitschuh 16 hinausragt, wird durch die Abmessungen der Klinge 15 bestimmt. Durch die einstückige Ausbildung der Klinge 15 mit dem Gleitschuh 16 wird der vorbestimmte Abstand zum Schälen des zu bearbeitenden Gegenstands schon bei der Fertigung eingestellt, den die Klinge 15 über den Gleitschuh 16 hinausragt.

Bei dem in den Fig. 6 und 7 dargestellten Schälmesser 5 ist eine Wendeklinge 21 in einem Gleitschuh 22 aufgenommen. Die Wendeklinge 21 ist dabei an zwei gegenüberliegenden Seiten 21a und 21b angeschliffen. Über eine Schraubverbindung 23 ist die Wendeklinge 21 mit dem Gleitschuh 22 an dem Schälerkopf 2 befestigbar.

Der Gleitschuh 22 ist durch zwei zueinander parallele und voneinander beabstandete Gleitflächen 24 und 25 gebildet. Die Gleitflächen 24, 25 sind als beidseitige Gleitflächen 24a, 24b und 25a, 25b ausgebildet, zwischen denen eine Ausnehmung 26 vorgesehen ist, in der die Wendeklinge 21 aufgenommen ist.

Die in Fig. 6 obere Seite der Wendeklinge 21 und des Gleitschuhs 22 mit den Gleitflächen 24a und 25a ist im Betriebszustand dem zu bearbeitenden Gegenstand zugewandt. Die Gleitflächen 24a und 25a liegen dabei an dem zu bearbeitenden Gegenstand an, während die angeschliffene Seite 21a der Wendeklinge 21 in den zu bearbeitenden Gegenstand eindringt. Die Gleitflächen 24b und 25b weisen mit der angeschliffenen Seite 21b von dem zu bearbeitenden Gegenstand weg. Die Schnitttiefe, d.h. der Abstand, den die Wendeklinge 21 aus dem Gleitschuh 22 hinausragt, ist durch die Geometrie der Wendeklinge 21 definiert.

Durch ein Lösen der Schraubverbindung 23 kann die Wendeklinge 21 mit dem Gleitschuh 22 von dem Schälerkopf 2 abgenommen werden. Zur weiteren Bearbeitung kann die Wendeklinge 21 mit dem Gleitschuh 22 dann gewendet an dem Schälerkopf 2 befestigt werden, so dass die angeschliffene Seite 21b der Wendeklinge 21 statt der angeschliffenen Seite 21a zu dem zu bearbeitenden Gegenstand zeigt, wobei die Gleitflächen 24b und 25b an dem zu bearbeitenden Gegenstand anliegen. Durch die Geometrie der Wendeklinge 21 können somit unterschiedliche Schnitttiefen eingestellt werden.

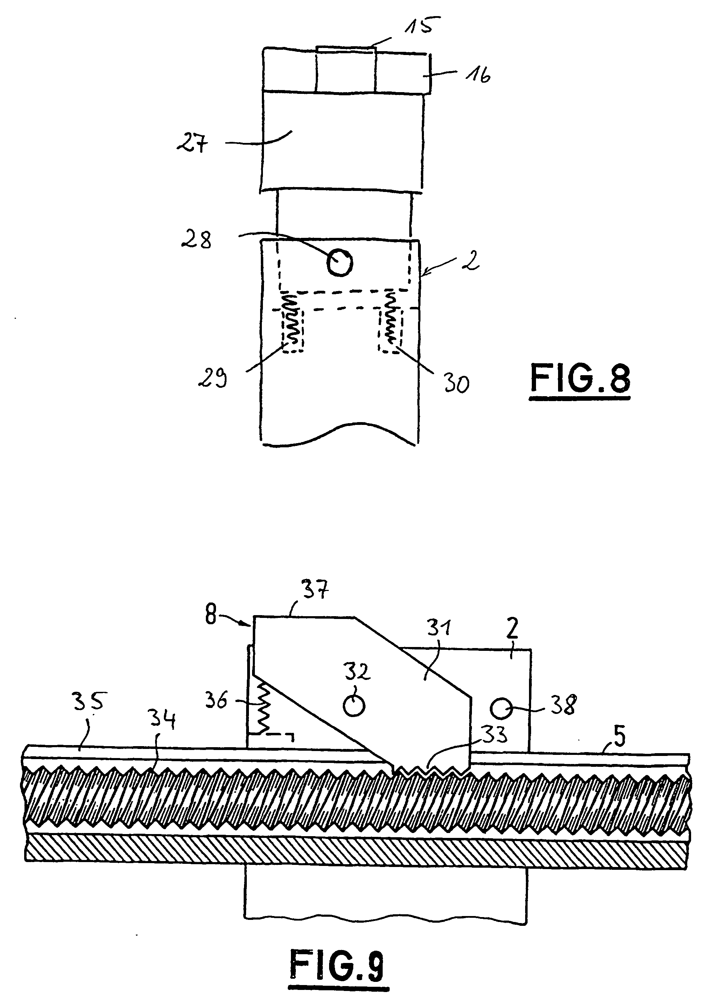

Vorzugsweise ist das Schälmesser 5 federnd in dem Schälerkopf 2 gelagert. Hierzu ist, wie in Fig. 8 dargestellt, ein Messerhalter 27 vorgesehen, der mittels eines Bolzens 28 schwenkbar an dem Schälerkopf 2 gelagert ist und den Gleitschuh 16 mit dem Schälmesser 5 trägt. Weiter ist der Messerhalter 27 durch zwei Federn 29 und 30 beaufschlagt, die ihn im unbelasteten Zustand in der in Fig. 8 gezeigten Lage halten. Wird der Gleitschuh mit dem Schälmesser 5 während der Bearbeitung eines Werkstücks belastet, so wird der Messerhalter 27 in einer Kipp- bzw. Schwenkbewegung um den Bolzen 28 gegen die Kraft der Federn 29, 30 ausgelenkt.

Der Schälerkopf 2 ist mit einem in Fig. 9 dargestellten Schnappverschluss 8 ausgebildet. Der Schnappverschluss 8 umfasst einen Hebel 31, der um eine Achse 32 schwenkbar in dem Schälerkopf 2 gelagert ist. An einem Ende des Hebels 31 ist ein Gewindeabschnitt 33 ausgebildet, der mit der Spindel 34 in Eingriff bringbar ist. Der Hebel 31 erstreckt sich dabei mit seinem den Gewindeabschnitt 33 tragenden Ende durch die schlitzförmige Öffnung 35 in den Spindeltrieb 4 hinein. Die Öffnung 35 weist dabei eine Breite auf, die wenigstens der Breite des Gewindeabschnitts 33, also beispielsweise dem Durchmesser der Spindel 34 entspricht. Der andere Hebelarm des Hebels 31 wird durch eine mit dem Schälerkopf 2 verbundene Feder 36 so beaufschlagt, dass der Gewindeabschnitt 33 gegen die Spindel 34 gedrückt wird.

Weiterhin ist an dem Hebel 31 ein Bereich 37 ausgebildet, der aus dem Schälerkopf 2 herausragt. Wird manuell auf diesen Bereich 37 des Hebels 31 gedrückt, so verschwenkt der Hebel 31 gegen die Kraft der Feder 36 in Fig. 9 gegen den Uhrzeigersinn. Der Gewindeabschnitt 33 gelangt damit außer Eingriff von der Spindel 34, so dass der Schälerkopf 2 ausschließlich auf der Spindelführung aufliegt. Der Schälerkopf 2 lässt sich somit frei auf der Spindelführung verschieben. Die Bewegung des Hebels 31 bei Betätigung des Bereichs 37 des Schnappverschlusses 8 wird durch einen Anschlag 38 begrenzt.

### Bezugszeichenliste

- 1: Schälgerät
- 2: Schälerkopf
- 3: Laufschale
- 4: Spindeltrieb
- 5: Schälmesser
- 6: Führungsrolle
- 7: Rolle
- 8: Schnappverschluss
- 9: Betätigungsgriff
- 10: Lagerblock
- 11: Lagerung
- 12: Drehachse
- 13: Anschlag
- 14: Anschlag
- 15: Klinge
- 16: Gleitschuh
- 17: Schraubverbindung
- 18: Gleitfläche
- 19: Gleitfläche
- 20: Ausnehmung
- 21: Wendeklinge
- 21a: angeschliffene Seite der Wendeklinge 16
- 21b: angeschliffene Seite der Wendeklinge 16
- 22: Gleitschuh
- 23: Schraubverbindung
- 24a: Gleitfläche
- 25a, b: Gleitfläche
- 26: Ausnehmung
- 27: Messerhalter
- 28: Bolzen
- 29: Feder
- 30: Feder
- 31: Hebel
- 32: Achse
- 33: Gewindeabschnitt
- 34: Spindel
- 35: Öffnung
- 36: Feder
- 37: Betätigungsbereich
- 38: Anschlag

## Patentansprüche

1. Schälgerät für zylinderförmige Gegenstände, insbesondere für Kunststoffrohre, mit mehreren zu einer Laufschale (3) zusammengefügten Rollen (7), einem wenigstens ein Schälmesser (5) und wenigstens eine Führungsrolle (6) aufweisenden Schälerkopf (2) und einem die Laufschale (3) und den Schälerkopf (2) verbindenden Spindeltrieb (4), der eine mit einer schlitzförmigen Öffnung versehene Spindelführung und eine darin drehbare Spindel mit einem Betätigungsgriff (9) umfasst, wobei der Schälerkopf (2) und die Laufschale (3), zwischen denen der zylinderförmige Gegenstand einspannbar ist, über die Spindel relativ zueinander bewegbar sind, **dadurch gekennzeichnet, dass** die wenigstens eine Führungsrolle (6) in einem Lagerblock (10) frei drehbar gelagert ist, der an dem Schälerkopf (2) um eine zu der Achse (12) der Führungsrolle (6) senkrechte und exzentrisch angeordnete Achse (11) frei schwenkbar befestigt ist.

2. Schälgerät nach Anspruch 1, **dadurch gekennzeichnet, dass** in dem Lagerblock (10) zwei koaxiale Führungsrollen (6) gelagert sind.

3. Schälgerät nach Anspruch 1 oder 2, **dadurch gekennzeichnet, dass** der Lagerblock (10) federnd an dem Schälerkopf (2) befestigt ist.

4. Schälgerät nach Anspruch 1 oder 2, **dadurch gekennzeichnet, dass** die Führungsrollen (6) federnd in dem Lagerblock (10) gelagert sind.

5. Schälgerät nach einem der vorangegangenen Ansprüche, **dadurch gekennzeichnet, dass** die Achsen (12) der Führungsrollen (6) in wenigstens einer Winkelposition zu der Achse des zu schälenden zylinderförmigen Gegenstands ausrichtbar und fixierbar sind.

6. Schälgerät nach Anspruch 5, **dadurch gekennzeichnet, dass** an dem Lagerblock (10) eine Feststellschraube zur Fixierung des Lagerblocks (10) relativ zu dem Schälerkopf (2) vorgesehen ist.

7. Schälgerät nach Anspruch 5, **dadurch gekennzeichnet, dass** an dem Schälerkopf (2) zwei Vorsprünge (13, 14) ausgebildet sind, zwischen denen der Lagerblock (10) schwenkbar ist.

8. Schälgerät nach einem der vorangegangenen Ansprüche, **dadurch gekennzeichnet, dass** das Schälmesser (5) eine in einem Gleitschuh (16, 22) aufgenommene, mit diesem einstückig ausgebildete Klinge (15, 21) aufweist, und dass der Gleitschuh (16, 22) an dem Schälerkopf (2) lösbar befestigt ist.

9. Schälgerät nach Anspruch 8, **dadurch gekennzeichnet, dass** der Gleitschuh (16, 22) zwei durch eine Ausnehmung (20, 26) voneinander beabstandete Gleitflächen (18, 19; 24a, 24b, 25a, 25b) aufweist.

10. Schälgerät nach Anspruch 9, **dadurch gekennzeichnet, dass** die Klinge (15, 21) des Schälmessers (5) in der Ausnehmung (20, 26) des Gleitschuhs (16, 22) angeordnet ist, und dass die Klinge (15, 21) bereichsweise über die Gleitflächen (18, 19; 24a, 24b, 25a, 25b) des Gleitschuhs (16, 22) hinausragt.

11. Schälgerät nach einem der Ansprüche 8 bis 10, **dadurch gekennzeichnet, dass** die Klinge (15, 21) mit dem Gleitschuh (16, 22) über eine Schraubverbindung (17, 23) an dem Schälerkopf (2) befestigt ist.

12. Schälgerät nach einem der Ansprüche 8 bis 10, **dadurch gekennzeichnet, dass** die Klinge (15, 21) mit dem Gleitschuh (16, 22) über eine Rastverbindung an dem Schälerkopf (2) befestigt ist.

13. Schälgerät nach einem der vorangegangenen Ansprüche **dadurch gekennzeichnet, dass** die Klinge (21) eine an zwei Seiten (21a, 21b) angeschliffene Wendeklinge (21) ist.

14. Schälgerät nach einem der vorangegangenen Ansprüche, **dadurch gekennzeichnet, dass** der Gleitschuh (16, 22) in einem Messerhalter (27) federnd und/oder kippbar an dem Schälerkopf (2) befestigt ist.

15. Schälgerät nach Anspruch 14, **dadurch gekennzeichnet, dass** der Messerhalter (27) um einen Bolzen (28) schwenkbar und durch wenigstens zwei Federn (29, 30) beaufschlagt in dem Schälerkopf (2) gelagert ist.

16. Schälgerät nach einem der vorangegangenen Ansprüche, **dadurch gekennzeichnet, dass** der Schälerkopf (2) und/oder die Laufschale (3) einen Gewindeabschnitt (31) aufweisen, über den sie durch einen Schnappverschluss (8) mit der Spindel (32) in lösbaren Eingriff bringbar sind.

17. Schälgerät nach einem der vorangegangenen Ansprüche, **dadurch gekennzeichnet, dass** in dem Spindeltrieb (4) an wenigstens einem Ende zwischen der Spindel und der Spindelführung ein elastisches Element angeordnet ist.

18. Schälgerät nach Anspruch 17, **dadurch gekennzeichnet, dass** an dem dem Betätigungsgriff (9) abgewandten Ende der Spindel ein mit dieser verbundenes und wenigstens bereichsweise in die Spindelführung hinein bewegbares Indikatorelement vorgesehen ist.

## Claims

1. A paring device for cylindrical objects, in particular for plastic tubes, comprising a plurality of rollers (7) which are combined to form a running trough array (3), a paring head (2) having at least one paring knife (5) and at least one guide roller (6), and a spindle drive (4) which connects the running trough array (3) and the paring head (2) and which includes a spindle guide provided with a slot-shaped opening and a spindle rotatable in the spindle guide and having an actuating handle (9), wherein the paring head (2) and the running trough array (3) between which the cylindrical object can be clamped are movable relative to each other by way of the spindle, **characterised in that** the at least one guide roller (6) is freely rotatably mounted in a mounting block (10) which is fixed to the paring head (2) freely pivotably about an axis (11) which is perpendicular to the axis (12) of the guide roller (6) and which is arranged eccentrically.

2. A paring device according to claim 1 **characterised in that** two coaxial guide rollers (6) are mounted in the mounting block (10).

3. A paring device according to claim 1 or claim 2 **characterised in that** the mounting block (10) is resiliently fixed to the paring head (2).

4. A paring device according to claim 1 or claim 2 **characterised in that** the guide rollers (6) are mounted resiliently in the mounting block (10).

5. A paring device according to one of the preceding claims **characterised in that** the axes (12) of the guide rollers (6) can be oriented and fixed in at least one angular position relative to the axis of the cylindrical object to be pared.

6. A paring device according to claim 5 **characterised in that** provided on the mounting block (10) is a fixing screw for fixing the mounting block (10) relative to the paring head (2).

7. A paring device according to claim 5 **characterised in that** provided on the paring head (2) are two projections (13, 14), between which the mounting block (10) is pivotable.

8. A paring device according to one of the preceding claims **characterised in that** the paring knife (5) has a blade (15, 21) which is accommodated in a slide shoe (16, 22) and which is formed in one piece therewith and that the slide shoe (16, 22) is releasably fixed to the paring head (2).

9. A paring device according to claim 8 **characterised in that** the slide shoe (16, 22) has two slide surfaces (18, 19; 24a, 24b, 25a, 25b) which are spaced from each other by an opening (20, 26).

10. A paring device according to claim 9 **characterised in that** the blade (15, 21) of the paring knife (5) is arranged in the opening (20, 26) of the slide shoe (16, 22) and that the blade (15, 21) projects region-wise beyond the slide surfaces (18, 19; 24a, 24b, 25a, 25b) of the slide shoe (16, 22).

11. A paring device according to one of claims 8 to 10 **characterised in that** the blade (15, 21) is fixed with the slide shoe (16, 22) by way of a screw connection (17, 23) on the paring head (2).

12. A paring device according to one of claims 8 to 10 **characterised in that** the blade (15, 21) is fixed with the slide shoe (16, 22) by way of a latching connection on the paring head (2).

13. A paring device according to one of the preceding claims **characterised in that** the blade (21) has a reversible blade (21) which is ground at two sides (21a, 21b).

14. A paring device according to one of the preceding claims **characterised in that** the slide shoe (16, 22) is fixed in a knife holder (27) resiliently and/or tiltably on the paring head (2).

15. A paring device according to claim 14 **characterised in that** the knife holder (27) is mounted in the paring head (2) pivotably about a pin (28) and acted upon by at least two springs (29, 30).

16. A paring device according to one of the preceding claims **characterised in that** the paring head (2) and/or the running trough array (3) have a screwthread portion (31) by way of which they can be brought into releasable engagement with the spindle (32) by a snap fastener (8).

17. A paring device according to one of the preceding claims **characterised in that** an elastic element is arranged in the spindle drive (4) at at least one end between the spindle and the spindle guide.

18. A paring device according to claim 17 **characterised in that** at the end of the spindle that is remote from the actuating handle (9) there is provided an indicator element which is connected to the spindle and which is movable at least region-wise into the spindle guide.

## Revendications

1. Appareil de décroutage pour objets cylindriques, notamment pour tubes en matière plastique, comprenant plusieurs rouleaux (7) réunis pour former une enveloppe de roulement (3), une tête de décrouteur (2) comprenant au moins une lame de décroutage (5) et au moins un rouleau de guidage (6) et un entraînement à tige filetée (4) reliant l'enveloppe de roulement (3) et la tête de décrouteur (2), lequel entraînement comporte un guide de tige (4) pourvu d'un orifice en forme dé fente et une tige pouvant être amenée en rotation à l'intérieur dudit guide, dotée d'une poignée d'actionnement (9), la tête de décrouteur (2) et l'enveloppe de roulement (3), entre lesquels peut être serré l'objet cylindrique, étant mobiles l'un par rapport à l'autre par l'intermédiaire de la tige, **caractérisé en ce qu'**un des rouleaux de guidage (6) est logé de manière à pouvoir être amené librement en rotation dans un support de palier (10), qui est fixé à la tête de décroutage (2) de manière à pouvoir pivoter librement autour d'un axe (11) disposé de façon excentrée par rapport à l'axe (12) du rouleau de guidage (6) et perpendiculaire à celui-ci.

2. Appareil de décroutage selon la revendication 1, **caractérisé en ce que** deux rouleaux de guidage coaxiaux (6) sont logés dans le support de palier (10).

3. Appareil de décroutage selon la revendication 1 ou 2, **caractérisé en ce que** le support de palier (10) est fixé de manière élastique sur la tête de décrouteur (2).

4. Appareil de décroutage selon la revendication 1 ou 2, **caractérisé en ce que** les rouleaux de guidage (6) sont logés de manière élastique dans le support de palier (10).

5. Appareil de décroutage selon l'une quelconque des revendications précédentes, **caractérisé en ce que** les axes (12) des rouleaux de guidage (6) peuvent être orientés et fixés dans au moins une position angulaire par rapport à l'axe de l'objet cylindrique destiné à être décrouté.

6. Appareil de décroutage selon la revendication 5, **caractérisé en ce qu'**une vis de blocage destinée à fixer le support de palier (10) par rapport à la tête de décrouteur (2) est prévue sur le support de palier (10).

7. Appareil de décroutage selon la revendication 5, **caractérisé en ce que** deux saillies (13, 14), entre lesquelles peut pivoter le support de palier (10), sont conçues sur la tête de décrouteur (2).

8. Appareil de décroutage selon l'une quelconque des revendications précédentes, **caractérisé en ce que** la lame de décroutage (5) comprend une barre de coupe (15, 21) reçue dans un patin coulissant (16, 22), conçue en une seule pièce avec celui-ci, et **en ce que** le patin coulissant (16, 22) est fixé de manière amovible à la tête de décrouteur (2).

9. Appareil de décroutage selon la revendication 8, **caractérisé en ce que** le patin coulissant (16, 22) comprend deux surfaces de glissement (18, 19 ; 24a, 24b, 25a, 25b) écartées l'une de l'autre par un évidement (20, 26).

10. Appareil de décroutage selon la revendication 9, **caractérisé en ce que** la barre de coupe (15, 21) de la lame de décroutage (5) est disposée dans l'évidement (20, 26) du patin coulissant (16, 22), et **en ce que** la barre de coupe (15, 21) dépasse par zones des surfaces de glissement (18, 19 ; 24a, 24b, 25a, 25b) du patin coulissant (16, 22).

11. Appareil de décroutage selon l'une quelconque des revendications 8 à 10, **caractérisé en ce que** la barre de coupe (15, 21) avec le patin coulissant (16, 22) est fixée à la tête de décrouteur (2) par l'intermédiaire d'un assemblage par vis (17, 23).

12. Appareil de décroutage selon l'une quelconque des revendications 8 à 10, **caractérisé en ce que** la barre de coupe (15, 21) avec le patin coulissant (16, 22) est fixée à la tête de décrouteur (2) par l'intermédiaire d'un assemblage encliquetable.

13. Appareil de décroutage selon l'une quelconque des revendications précédentes, **caractérisé en ce que** la barre de coupe (21) est une barre de coupe rotative (21) dont les deux côtés (21a, 21b) sont affûtés.

14. Appareil de décroutage selon l'une quelconque des revendications précédentes, **caractérisé en ce que** le patin coulissant (16, 22) est fixé de manière élastique et/ou basculante à la tête de décrouteur (2) dans un porte-lame (27).

15. Appareil de décroutage selon la revendication 14, **caractérisé en ce que** le porte-lame (27) est logé dans la tête de décrouteur (2) de manière à pouvoir pivoter autour d'un boulon (28) et en étant sollicité par au moins deux ressorts (29, 30).

16. Appareil de décroutage selon l'une quelconque des revendications précédentes, **caractérisé en ce que** la tête de décrouteur (2) et/ou l'enveloppe de roulement (3) comprennent une section filetée (31), par l'intermédiaire de laquelle elles peuvent être amenées en prise amovible avec la tige (32) grâce à une fermeture à ressort (8).

17. Appareil de décroutage selon l'une quelconque des revendications précédentes, **caractérisé en ce qu'**un élément élastique est disposé dans l'entraînement à tige filetée (4) sur au moins une extrémité entre la tige et le guide de tige.

18. Appareil de décroutage selon la revendication 17, **caractérisé en ce qu'**il est prévu sur l'extrémité de la tige opposée à la poignée d'actionnement (9) un élément indicateur mobile au moins par zones à l'intérieur du guide de tige et relié à ladite tige.
